# EUROPEAN PATENT APPLICATION

(11) **EP 4 560 113 A1**
(43) Date of publication of application: **28.05.2025**
(21) Application number: 24212780.1
(22) Date of filing: 13.11.2024
(51) Int. Cl.: F01D 9/02, F02C 3/05, F23R 3/00, F23R 3/54

(54) **COOLING NOZZLE VANES OF A TURBINE ENGINE**

(30) Priority: 13.11.2023 US 202318389208
(71) Applicant: RTX Corporation, Farmington, CT 06032 (US)
(72) Inventor: BINEK, Lawrence A., Glastonbury, 06033 (US); PAULINO, Jose R., Jupiter, 33478 (US); LUTJEN, Paul M., Kennebunkport, 04046 (US)
(74) Representative: Dehns

(57) **Abstract**

An assembly for a turbine engine includes a nozzle structure and a plurality of cooling vanes (114). The nozzle structure includes a first platform (78), a second platform (76) and a plurality of nozzle vanes (112) arranged circumferentially about an axis (22). The first platform (78) forms a first peripheral boundary of a flowpath (28) extending axially through the nozzle structure. The second platform (76) forms a second peripheral boundary of the flowpath (28) extending axially through the nozzle structure. The nozzle vanes (112) extend radially across the flowpath (28) from the first platform (78) to the second platform (76). The cooling vanes (114) are arranged circumferentially about the axis (22). Each of the cooling vanes (114) projects radially away from the first platform (78). The first platform (78) is radially between the cooling vanes (114) and the nozzle vanes (112).

## Description

### BACKGROUND

### 1. Technical Field

This invention relates generally to a turbine engine and, more particularly, to a stationary structure for the turbine engine.

### 2. Background Information

A gas turbine engine includes a stationary engine structure for housing and/or supporting internal rotating components of the gas turbine engine. Various stationary engine structures are known in the art. While these known stationary engine structures have various benefits, there is still room in the art for improvement.

### SUMMARY

According to an aspect of the present invention, an assembly is provided for a turbine engine. This turbine engine assembly includes a nozzle structure and a plurality of cooling vanes. The nozzle structure includes a first platform, a second platform and a plurality of nozzle vanes arranged circumferentially about an axis. The first platform forms a first peripheral boundary of a flowpath extending axially through the nozzle structure. The second platform forms a second peripheral boundary of the flowpath extending axially through the nozzle structure. The nozzle vanes extend radially across the flowpath from the first platform to the second platform. The cooling vanes are arranged circumferentially about the axis. Each of the cooling vanes projects radially from (i.e. out or away from) the first platform. The first platform is radially between the cooling vanes and the nozzle vanes.

According to another aspect of the present invention, another assembly is provided for a turbine engine. This turbine engine assembly includes a first platform, a second platform, a plurality of vanes and a plurality of cooling elements. The first platform extends circumferentially about an axis. The first platform forms a first peripheral boundary of a flowpath. The second platform extends circumferentially about the axis. The second platform forms a second peripheral boundary of the flowpath radially opposite the first peripheral boundary of the flowpath. The vanes are arranged circumferentially about the axis and are connected to the first platform and the second platform. Each of the vanes extends radially across the flowpath from the first platform to the second platform. The cooling elements are connected to the first platform radially opposite the vanes. The cooling elements are configured as a heat sink for the vanes. Each of the cooling elements projects radially from (i.e. out or away from) the first platform to an unsupported distal end.

According to still another aspect of the present invention, another assembly is provided for a turbine engine. This turbine engine assembly includes a combustor, a vane array structure and a plurality of cooling elements. The combustor includes a combustor wall. The vane array structure includes an inner platform, an outer platform and a plurality of vanes arranged circumferentially about an axis. The inner platform axially overlaps and circumscribes a downstream portion of the combustor wall. The outer platform axially overlaps and circumscribes the inner platform. The vanes are radially between and connected to the inner platform and the outer platform. The cooling elements are located radially between the vane array structure and the downstream portion of the combustor wall. Each of the cooling elements projects radially from (i.e. out or away from) the inner platform.

Optionally, and in accordance with any of the above, a first of the cooling elements may project radially out from the inner platform to a distal end that is radially spaced from the combustor wall.

Optionally, and in accordance with any of the above, each of the cooling elements may be configured as a cooling vane.

Optionally, and in accordance with any of the above, the assembly may also include a monolithic body. The monolithic body may include the first platform, the second platform, the vanes and the cooling elements.

Optionally, and in accordance with any of the above, the nozzle structure may be configured as or otherwise include a turbine nozzle structure. The nozzle vanes may be configured as or otherwise include a plurality of turbine vanes.

Optionally, and in accordance with any of the above, the assembly may also include a compressor section, a combustor section and a turbine section. The combustor section may include a combustor. The turbine section may include a bladed turbine rotor. The flowpath may extend through the compressor section, the combustor section and the turbine section with the nozzle structure arranged between the combustor and the bladed turbine rotor along the flowpath.

Optionally, and in accordance with any of the above, the first platform may be configured as or otherwise include an inner platform. The second platform may be configured as or otherwise include an outer platform radially outboard of and circumscribing the inner platform.

Optionally, and in accordance with any of the above, each of the cooling vanes may have a common longitudinal length.

Optionally, and in accordance with any of the above, the cooling vanes may include a first cooling vane and a second cooling vane. The first cooling vane may have a first longitudinal length extending longitudinally between a leading edge of the first cooling vane and a trailing edge of the first cooling vane. The second cooling vane may have a second longitudinal length extending longitudinally between a leading edge of the second cooling vane and a trailing edge of the second cooling vane. The second longitudinal length may be different than the first longitudinal length.

Optionally, and in accordance with any of the above, the cooling vanes may include a first cooling vane. The first cooling vane may laterally taper as the first cooling vane projects radially away from the first platform.

Optionally, and in accordance with any of the above, the cooling vanes may include a first cooling vane. At least a spanwise portion of the first cooling vane may have a uniform lateral width.

Optionally, and in accordance with any of the above, the cooling vanes may include a first cooling vane. The first cooling vane may be configured as or otherwise include a cambered vane.

Optionally, and in accordance with any of the above, the cooling vanes may include a first cooling vane. The first cooling vane may be configured as or otherwise include a symmetrical vane.

Optionally, and in accordance with any of the above, the cooling vanes may include a first cooling vane. The first cooling vane may project out from the first platform along a span line of the first cooling vane to an end of the first cooling vane. At least a portion of the span line may be straight.

Optionally, and in accordance with any of the above, the cooling vanes may include a first cooling vane. The first cooling vane may project out from the first platform along a span line of the first cooling vane to an end of the first cooling vane. At least a portion of the span line may be curved.

Optionally, and in accordance with any of the above, the cooling vanes may include a first cooling vane. The first cooling vane may project radially out from the first platform to an unsupported distal end of the first cooling vane.

Optionally, and in accordance with any of the above, the assembly may also include a combustor including a combustor wall. The first platform may axially overlap a downstream end portion of the combustor wall. The cooling vanes may include a first cooling vane radially spaced from the combustor wall by a gap.

Optionally, and in accordance with any of the above, the cooling vanes may include a first cooling vane and a second cooling vane. The nozzle vanes may include a first nozzle vane that circumferentially overlaps the first cooling vane and the second cooling vane.

Optionally, and in accordance with any of the above, the cooling vanes may include a first cooling vane. The nozzle vanes may include a first nozzle vane that circumferentially overlaps the first cooling vane. A chord line of the first cooling vane may be angularly offset from a chord line of the first nozzle vane by an angle between sixty degrees and ninety degrees.

Optionally, and in accordance with any of the above, a circumferentially neighboring pair of the cooling vanes may be axially aligned along the axis.

Optionally, and in accordance with any of the above, a circumferentially neighboring pair of the cooling vanes may be axially offset along the axis.

Optionally, and in accordance with any of the above, the assembly may also include a monolithic body including the nozzle structure and the cooling vanes.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic side sectional illustration of a turbine engine.
FIG. 2 is a schematic side sectional illustration of a portion of the turbine engine of FIG. 1 at its combustor.
FIG. 3 is a perspective cutaway illustration of a portion of the turbine engine of FIG. 1 with a turbine nozzle and a cooling structure.
FIG. 4 is a partial plan view illustration of the cooling structure with dashed line vanes of the turbine nozzle overlaid on the cooling structure taken along line 4-4 in FIG. 3.
FIGS. 5 and 6 are partial plan view illustrations of alternative cooling structure arrangements with a dashed line turbine nozzle vane overlaid on the cooling structure.
FIGS. 7 and 8 are plan view illustrations of a cooling vane with various arrangements.
FIGS. 9-12 are side schematic illustrations of a cooling vane with various arrangements connected to a turbine nozzle platform.

### DETAILED DESCRIPTION

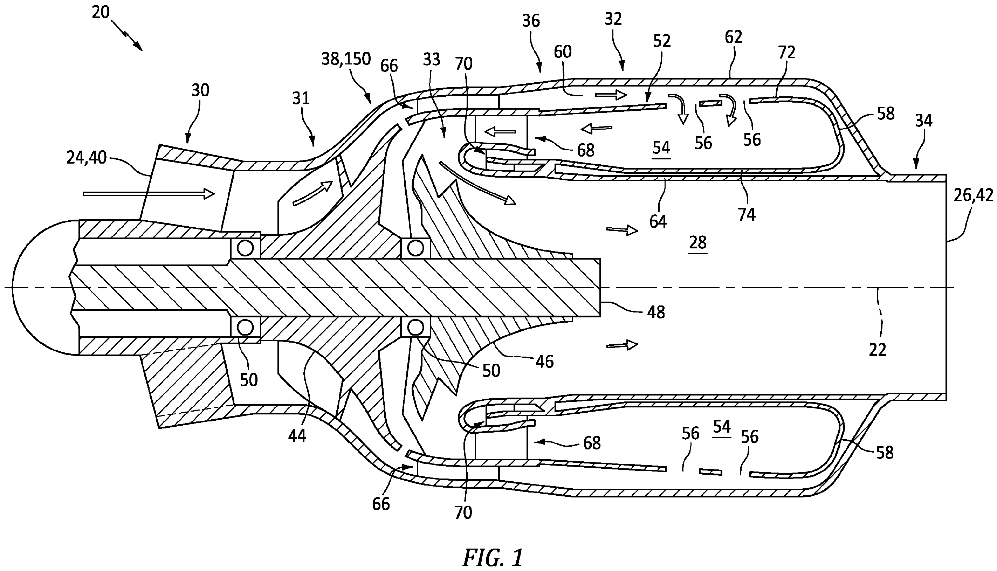

FIG. 1 is a side sectional illustration of a turbine engine 20. The turbine engine 20 of FIG. 1 is configured as a single spool, radial-flow turbojet gas turbine engine. This turbine engine 20 is configured for propelling an aircraft such as, but not limited to, an airplane, a drone (e.g., an unmanned aerial vehicle (UAV)), a spacecraft or any other manned or unmanned aerial vehicle or system. The present invention, however, is not limited to such an exemplary turbojet turbine engine configuration nor to an aircraft propulsion system application. For example, the turbine engine 20 may alternatively be configured as an auxiliary power unit (APU) for the aircraft, or an industrial gas turbine engine.

The turbine engine 20 of FIG. 1 extends axially along an axial centerline 22 from a forward, upstream airflow inlet 24 into the turbine engine 20 to an aft, downstream combustion products exhaust 26 from the turbine engine 20. This axial centerline 22 may also be a centerline axis and/or a rotational axis for various components within the turbine engine 20.

The turbine engine 20 includes a core flowpath 28, an inlet section 30, a compressor section 31, a (e.g., reverse flow) combustor section 32, a turbine section 33 and an exhaust section 34. At least (or only) the compressor section 31, the combustor section 32 and the turbine section 33 may form a core 36 of the turbine engine 20. The turbine engine 20 also includes a stationary structure 38 housing and/or forming one or more or all of the engine sections 30-34.

The core flowpath 28 extends within the turbine engine 20 and its engine core 36 from an airflow inlet 40 into the core flowpath 28 to a combustion products exhaust 42 from the core flowpath 28. More particularly, the core flowpath 28 of FIG. 1 extends sequentially through the inlet section 30, the compressor section 31, the combustor section 32 and the turbine section 33 to the exhaust section 34. The core inlet 40 of FIG. 1 forms the engine inlet 24 into the turbine engine 20. The core exhaust 42 of FIG. 1 forms the engine exhaust 26 from the turbine engine 20.

The compressor section 31 includes a bladed compressor rotor 44. The turbine section 33 includes a bladed turbine rotor 46. Each of these engine rotors 44, 46 includes a rotor base (e.g., a hub or a disk) and a plurality of rotor blades arranged circumferentially around and connected to the rotor base. The rotor blades, for example, may be formed integral with or mechanically fastened, welded, brazed and/or otherwise attached to the respective rotor base.

The compressor rotor 44 may be configured as a radial flow compressor rotor (e.g., an axial inflow-radial outflow compressor rotor), and the compressor section 31 may be configured as a radial flow compressor section. The turbine rotor 46 may be configured as a radial flow turbine rotor (e.g., a radial inflow-axial outflow turbine rotor), and the turbine section 33 may be configured as a radial flow turbine section. The compressor rotor 44 is connected to the turbine rotor 46 through an engine shaft 48. This engine shaft 48 is rotatably supported by the stationary structure 38 through a plurality of bearings 50; e.g., rolling element bearings, journal bearings, etc.

The combustor section 32 includes an annular combustor 52 with an annular combustion chamber 54. The combustor 52 of FIG. 1 is configured as a reverse flow combustor. Inlet ports 56 and/or flow tubes into the combustion chamber 54, for example, may be arranged at (e.g., on, adjacent or proximate) and/or towards an aft bulkhead wall 58 of the combustor 52. An outlet from the combustor 52 may be arranged axially aft of an inlet to the turbine section 33. The combustor 52 may also be arranged radially outboard of and/or axially overlap at least a (e.g., aft) portion of the turbine section 33. With this arrangement, the core flowpath 28 of FIG. 1 reverses direction (e.g., from a forward-to-aft direction to an aft-to-forward direction) a first time as the core flowpath 28 extends from a diffuser plenum 60 surrounding the combustor 52 into the combustion chamber 54. The core flowpath 28 of FIG. 1 then reverses direction (e.g., from the aft-to-forward direction to the forward-to-aft direction) a second time as the core flowpath 28 extends from the combustion chamber 54 into the turbine section 33.

During operation, air enters the turbine engine 20 through the inlet section 30 and its core inlet 4. The inlet section 30 directs the air from the core inlet 40 into the core flowpath 28 and the compressor section 31. The air entering the core flowpath 28 may be referred to as "core air". This core air is compressed by the compressor rotor 44. The compressed core air is directed through a diffuser and its diffuser plenum 60 into the combustion chamber 54. Fuel is injected and mixed with the compressed core air to provide a fuel-air mixture. This fuel-air mixture is ignited within the combustion chamber 54, and combustion products thereof flow through the turbine section 33 and cause the turbine rotor 46 to rotate. The rotation of the turbine rotor 46 drives rotation of the compressor rotor 44 and, thus, compression of the air received from the core inlet 40. The exhaust section 34 directs the combustion products out of the turbine engine 20 to provide forward engine thrust.

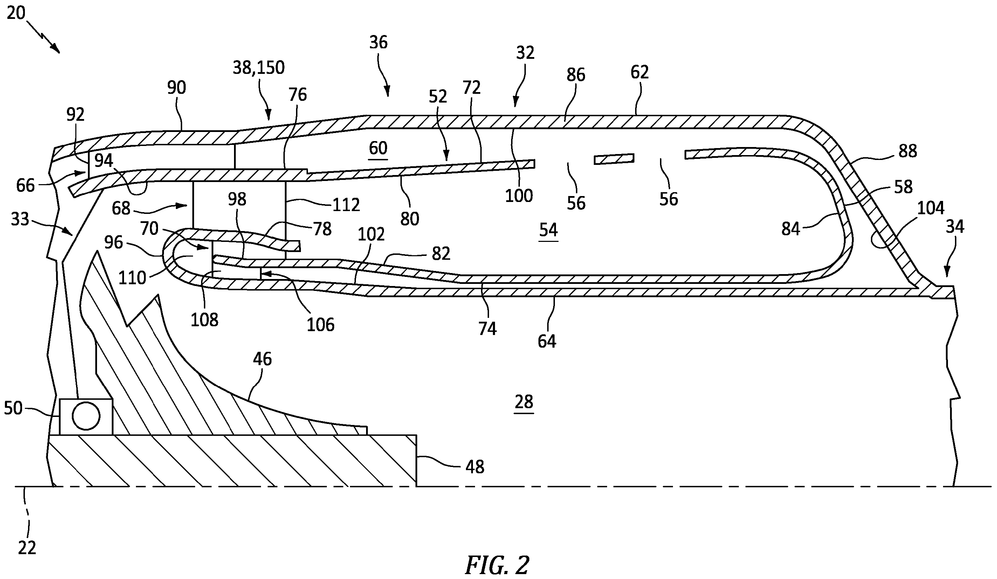

Referring to FIG. 2, the stationary structure 38 includes the combustor 52 and one or more engine cases 62 and 64 forming the diffuser plenum 60 along the combustor 52. The stationary structure 38 of FIG. 2 also includes a diffuser nozzle 66, a turbine nozzle 68 and a cooling structure 70.

The combustor 52 of FIG. 2 includes a radial outer combustor wall 72, a radial inner combustor wall 74 and the bulkhead wall 58. The combustor 52 and each of its combustor walls 58, 72 and 74 extends circumferentially about (e.g., completely around) the axial centerline 22. The combustor 52 and each of its combustor walls 72 and 74 may thereby have a full-hoop (e.g., tubular) geometry, and the bulkhead wall 58 may have a full-hoop (e.g., annular, frustoconical, etc.) geometry.

The outer combustor wall 72 is arranged axially between the bulkhead wall 58 and the turbine nozzle 68. The outer combustor wall 72 of FIG. 2, for example, projects axially along the axial centerline 22 (e.g., in the forward direction) out from the bulkhead wall 58 to a radial outer platform 76 of the turbine nozzle 68 (turbine nozzle outer platform 76). The outer combustor wall 72 of FIG. 2 is connected to (e.g., formed integral with) the bulkhead wall 58 at a radial out end of the bulkhead wall 58. The outer combustor wall 72 of FIG. 2 is also connected (e.g., formed integral with) the turbine nozzle outer platform 76 at an aft end of the turbine nozzle outer platform 76.

The inner combustor wall 74 is arranged axially between the bulkhead wall 58 and the turbine nozzle 68. The inner combustor wall 74 of FIG. 2, for example, projects axially along the axial centerline 22 (e.g., in the forward direction) out from the bulkhead wall 58 towards a radial inner platform 78 of the turbine nozzle 68. The inner combustor wall 74 of FIG. 2 is connected to (e.g., formed integral with) the bulkhead wall 58 at a radial inner end of the bulkhead wall 58.

The bulkhead wall 58 is arranged radially between the outer combustor wall 72 and the inner combustor wall 74. The bulkhead wall 58 of FIG. 2, for example, projects radially (e.g., outward away from the axial centerline 22) out from the inner combustor wall 74 to the outer combustor wall 72. The bulkhead wall 58 of FIG. 2 is connected to the outer combustor wall 72 at an aft end of the outer combustor wall 72. The bulkhead wall 58 of FIG. 2 is connected to the inner combustor wall 74 at an aft end of the inner combustor wall 74.

The combustor walls 58, 72 and 74 collectively form the combustion chamber 54 of FIG. 2 within the combustor 52. An interior surface 80 (e.g., a tubular radial inner surface) of the outer combustor wall 72 forms a radial outer peripheral boundary of the combustion chamber 54. An interior surface 82 (e.g., a tubular radial outer surface) of the inner combustor wall 74 forms a radial inner peripheral boundary of the combustion chamber 54. An interior surface 84 (e.g., an annular forward surface) of the bulkhead wall 58 forms a side peripheral boundary of the combustion chamber 54. The combustion chamber 54 thereby extends radially within the combustor 52 between the inner combustor wall 74 and its interior surface 82 and the outer combustor wall 72 and its interior surface 80. The combustion chamber 54 projects axially into the combustor 52 from the outlet of the combustion chamber 54 (e.g., at the turbine nozzle 68) to the bulkhead wall 58 and its interior surface 84.

The diffuser case 62 is spaced radially outboard from the combustor 52 and the turbine nozzle 68. The diffuser case 62 extends axially along the axial centerline 22, and axially overlaps the combustor 52 and its outer combustor wall 72. The diffuser case 62 may also axially overlap the turbine nozzle 68 and its turbine nozzle outer platform 76. The diffuser case 62 of FIG. 2, for example, includes a diffuser sidewall 86 and a diffuser endwall 88. The diffuser sidewall 86 projects axially (e.g., in the forward direction) out from the diffuser endwall 88, axially along the outer combustor wall 72 and the turbine nozzle outer platform 76, to the diffuser nozzle 66. This diffuser sidewall 86 of FIG. 2 is connected to (e.g., formed integral with) the diffuser endwall 88 at a radial outer end of the diffuser endwall 88. The diffuser sidewall 86 of FIG. 2 is also connected to (e.g., formed integral with) a radial outer platform 90 of the diffuser nozzle 66 at an aft end of the turbine nozzle outer platform 76. The diffuser endwall 88 projects radially (e.g., outward away from the axial centerline 22) out from the turbine case 64, along the bulkhead wall 58, to the diffuser sidewall 86. This diffuser endwall 88 of FIG. 2 is connected to (e.g., formed integral with) the diffuser sidewall 86 at an aft end of the diffuser sidewall 86, and to the turbine case 64. The diffuser case 62 and its diffuser walls 86 and 88 extend circumferentially about (e.g., completely around) the axial centerline 22. The diffuser case 62 and its diffuser walls 86 and 88 may thereby circumscribe the combustor 52 and/or the turbine case 64.

The diffuser nozzle 66 is a vane array structure. This diffuser nozzle 66 is configured to condition the core air leaving the compressor section 31 and entering the diffuser plenum 60. The diffuser nozzle 66 of FIG. 2, for example, includes one or more diffuser vanes 92 (e.g., guide vanes) configured to impart swirl to the core air. These diffuser vanes 92 are arranged (e.g., equispaced) circumferentially about the axial centerline 22 in an annular diffuser vane array. Each of the diffuser vanes 92 extends radially across the core flowpath 28. Each of the diffuser vanes 92 of FIG. 2, for example, extends radially between and is connected to (e.g., formed integral with) the diffuser nozzle outer platform 90 and a radial inner platform 94 of the diffuser nozzle 66. Here, the diffuser nozzle inner platform 94 may be partially (or completely) formed by the turbine nozzle 68 and its turbine nozzle outer platform 76. However, in other embodiments, the diffuser nozzle inner platform 94 and the turbine nozzle outer platform 76 may be discrete from one another; e.g., axially offset from one another.

The turbine case 64 is spaced radially outboard of the turbine rotor 46. The turbine case 64 extends axially along the axial centerline 22, and axially overlaps at least an aft portion of the turbine rotor 46. The turbine case 64 extends circumferentially about (e.g., completely around) the axial centerline 22, and circumscribes at least the aft portion of the turbine rotor 46. The turbine case 64 thereby houses at least the aft portion of the turbine rotor 46. The turbine case 64 also forms a radial outer peripheral boundary of the core flowpath 28 across at least the aft portion of the turbine rotor 46.

The turbine case 64 of FIG. 2 is spaced radially inboard from the combustor 52 and the turbine nozzle 68. The turbine case 64 may be connected to the turbine nozzle inner platform 78 by an (e.g., annular) intermediate structure 96. This intermediate structure 96 may have a substantially U-shaped geometry which extends from an upstream end of the turbine case 64 to a downstream end of the turbine nozzle inner platform 78. With this arrangement, at least (or only) the turbine case 64, the turbine nozzle inner platform 78 and the intermediate structure 96 collectively form a flowpath wall that wraps around a downstream end portion 98 (e.g., an axial forward end portion) of the inner combustor wall 74. The downstream end portion 98 of the inner combustor wall 74 may thereby project axially into a (e.g., annular) space formed by and located radially between the turbine case 64 and the turbine nozzle 68 and its turbine nozzle inner platform 78.

The engine cases 62 and 64 collectively form the diffuser plenum 60 of FIG. 2 around the combustor 52. A (e.g., tubular) radial inner surface 100 of the diffuser sidewall 86 forms a radial outer peripheral boundary of the diffuser plenum 60 radially outboard of the combustor 52 and its outer combustor wall 72. A (e.g., tubular) radial outer surface 102 of the turbine case 64 forms a radial inner peripheral boundary of the diffuser plenum 60 radially inboard of the combustor 52 and its inner combustor wall 74. An (e.g., annular) axial side surface 104 of the diffuser endwall 88 forms a side peripheral boundary of the diffuser plenum 60 axially to a side of the combustor 52 and its bulkhead wall 58. With this arrangement, a radial outer portion of the diffuser plenum 60 extends radially between and is formed by the diffuser case 62 and the outer combustor wall 72. A radial inner portion of the diffuser plenum 60 extends radially between and is formed by the turbine case 64 and the inner combustor wall 74. An axial end portion of the diffuser plenum 60 extends axially between and is formed by the diffuser endwall 88 and the bulkhead wall 58. The diffuser plenum 60 may thereby extend axially along each combustor wall 72, 74 and radially along the bulkhead wall 58.

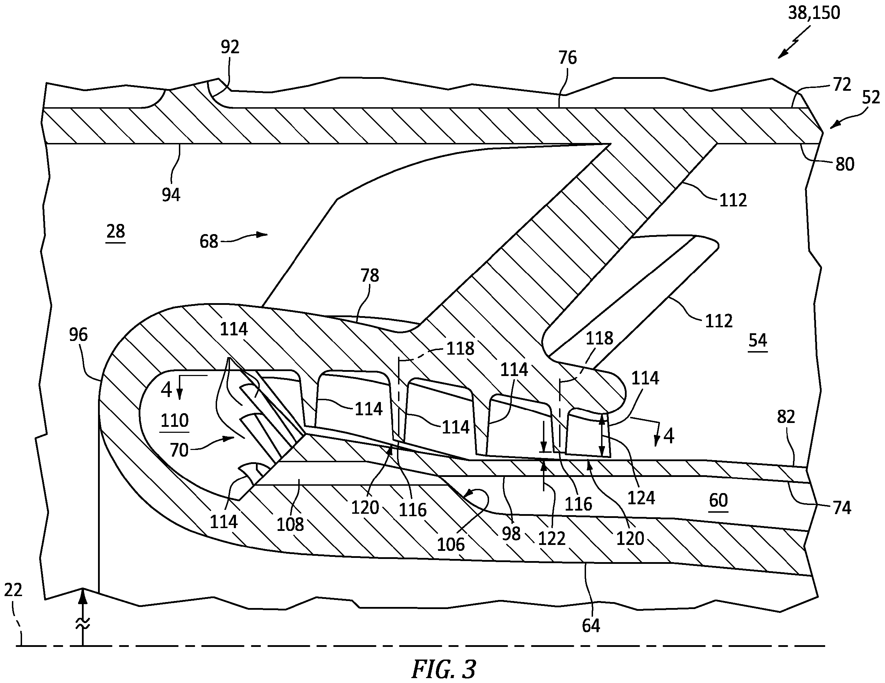

A (e.g., annular) support structure 106 may be provided to support the inner combustor wall 74 and its downstream end portion 98 relative to the turbine case 64. The support structure 106 may also locate the downstream end portion 98 of the inner combustor wall 74 relative to the turbine case 64 and the turbine nozzle inner platform 78; e.g., maintain radial spacing between the stationary structure members 74 and 78. The support structure 106 of FIG. 2, for example, extends circumferentially about (e.g., completely around) the axial centerline 22. The support structure 106 extends radially between and is connected to (e.g., formed integral with) the turbine case 64 and the downstream end portion 98 of the inner combustor wall 74. The support structure 106 may include one or more ports 108 arranged circumferentially about the axial centerline 22 in an annular array; see also FIG. 3. Each of these ports 108 extends (e.g., axially) through the support structure 106 and fluidly couples the inner portion the diffuser plenum 60 to a (e.g., annular) passage 110; e.g., cooling passage, a leakage passage, etc.

The turbine nozzle 68 is a vane array structure. This turbine nozzle 68 is configured to condition the combustion products exiting the combustor 52 and its combustion chamber 54. The turbine nozzle 68 of FIG. 2, for example, includes one or more turbine vanes 112 (e.g., guide vanes) configured to impart swirl to the combustion products. These turbine vanes 112 are arranged (e.g., equispaced) circumferentially about the axial centerline 22 in a turbine vane array. Each of the turbine vanes 112 extends radially across the core flowpath 28. Each of the turbine vanes 112 of FIG. 2, for example, extends radially between and is connected to (e.g., formed integral with) the turbine nozzle outer platform 76 and the turbine nozzle inner platform 78. Here, a radial outer surface of the turbine nozzle inner platform 78 forms a radial inner peripheral boundary of the core flowpath 28 (e.g., axially) through the turbine nozzle 68. A radial inner surface of the turbine nozzle outer platform 76 forms a radial outer peripheral boundary of the core flowpath 28 through the turbine nozzle 68 which is radially opposite the inner peripheral boundary formed by the turbine nozzle inner platform 78.

The turbine nozzle inner platform 78 axially overlaps and is spaced radially outboard from the inner combustor wall 74 and its downstream end portion 98. The turbine nozzle inner platform 78 extends circumferentially about (e.g., completely around) the axial centerline 22, and circumscribes the inner combustor wall 74 and its downstream end portion 98. With this arrangement, at least a portion of the passage 110 is formed by and radially between the turbine nozzle inner platform 78 and the inner combustor wall 74. The passage 110 of FIG. 2 extends in the aft direction to the combustion chamber 54. The passage 110 thereby fluidly couples the inner portion of the diffuser plenum 60, through the ports 108, to the combustion chamber 54.

Referring to FIG. 3, the cooling structure 70 is disposed in the passage 110 between the turbine nozzle inner platform 78 and the downstream end portion 98 of the inner combustor wall 74. This cooling structure 70 is configured as a heat sink for the turbine nozzle 68. More particularly, the cooling structure 70 is configured to receive thermal energy from the turbine nozzle 68 to facilitate cooling of the turbine nozzle 68 and its turbine vanes 112. The cooling structure 70 of FIG. 3, for example, includes the turbine nozzle inner platform 78 and a plurality of cooling vanes 114.

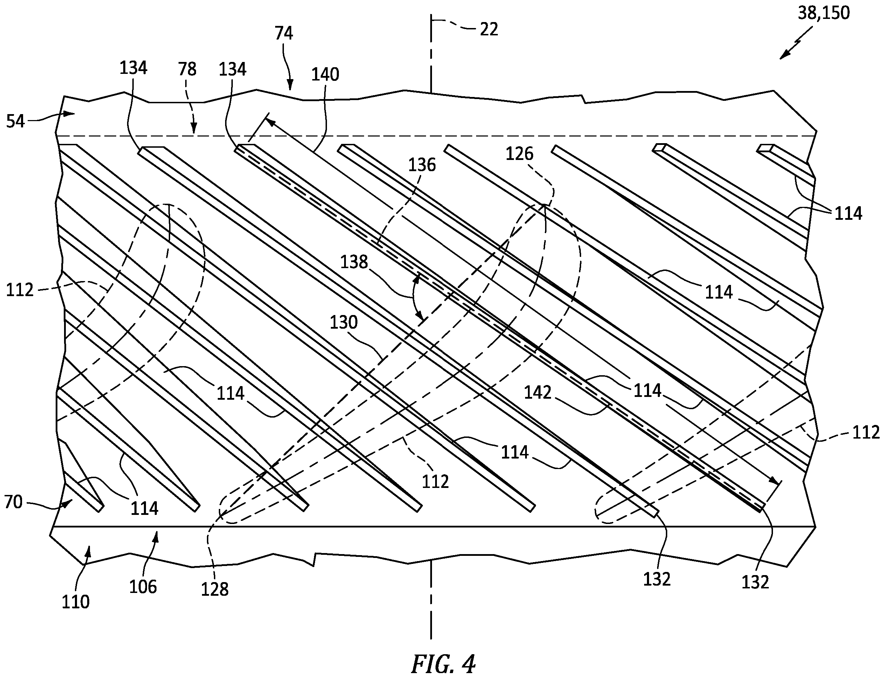

The cooling vanes 114 are arranged (e.g., equispaced) circumferentially about the axial centerline 22 in a cooling vane array within the passage 110; see also FIG. 4. Each of these cooling vanes 114 is connected to (e.g., formed integral with) the turbine nozzle 68 and its turbine nozzle inner platform 78. Each of the cooling vanes 114 projects radially out from the turbine nozzle inner platform 78 (in a radial inward direction towards the axial centerline 22) into the passage 110 to a radial inner distal end 116 of the respective cooling vane 114. More particularly, each cooling vane 114 projects out from the turbine nozzle inner platform 78 along a span line 118 of the respective cooling vane 114 to its distal vane end 116. This distal vane end 116 of FIG. 3 is (e.g., completely) radially spaced from the inner combustor wall 74 and its downstream end portion 98 by a gap 120; e.g., an air gap, an open volume, etc. Each cooling vane 114 may thereby be cantilevered from the turbine nozzle inner platform 78, where the distal vane end 116 of each cooling vane 114 may be structurally unsupported.

The gap 120 provides a structural break between the respective cooling vane 114 and the inner combustor wall 74 to accommodate, for example, differential thermally induced movement (e.g., slight shifting) between the cooling structure 70 and the downstream end portion 98 of the inner combustor wall 74. The gap 120 also provides a thermal break between the respective cooling vane 114 and the inner combustor wall 74. However, the gap 120 may have a relatively small radial height 122 such that the respective cooling vane 114 may extend substantially across the passage 110 towards the inner combustor wall 74. A radial span 124 of each cooling vane 114, for example, may be at least five times (5x) the gap height 122; e.g., between ten times (10x) and thirty times (30x) the gap height 122. Alternatively, the gap 120 may be less than five times the gap height 122 to reduce flow obstructions within the passage 110.

During turbine engine operation, some of the compressed core air (e.g., cooling air) is directed into the passage 110 through the ports 108 from the diffuser plenum 60. This compressed core air flows along each cooling vane 114 before exiting the passage 110 and entering the combustion chamber 54. The flow of the compressed core air along the cooling vanes 114 facilitates convective cooling of the cooling structure 70 and its cooling vanes 114. By cooling the cooling vanes 114 with the compressed core air, the cooling vanes 114 may draw thermal energy out of the turbine nozzle 68 and its turbine vanes 112. The cooling structure 70 and its cooling vanes 114 are thereby operable to cool the turbine nozzle 68 and its turbine vanes 112 during turbine engine operation. Cooling the turbine nozzle 68 and its turbine vanes 112 reduces an operating temperature of the turbine vanes 112, which may reduce thermal erosion and/or degradation of the turbine vanes 112.

To increase thermal conduction between the turbine vanes 112 and the cooling vanes 114, the cooling vanes 114 are arranged in close proximity to and radially opposite the turbine vanes 112. The turbine vane array of FIG. 3, for example, axially overlaps and circumscribes the cooling vane array with the turbine nozzle inner platform 78 radially between the vanes 112 and 114. With this arrangement, referring to FIG. 4, each turbine vane 112 may circumferentially and axially overlap one or more of the cooling vanes 114; e.g., a subset of multiple of the cooling vanes 114. Thus, heat energy from a single one of the turbine vanes 112 may be transferred into multiple of the cooling vanes 114.

Each turbine vane 112 extends longitudinally between a leading edge 126 of the respective turbine vane 112 and a trailing edge 128 of the respective turbine vane 112. Each turbine vane 112 has a chord line 130 which extends from its turbine vane leading edge 126 to its turbine vane trailing edge 128. Similarly, each cooling vane 114 extends longitudinally between a leading edge 132 of the respective cooling vane 114 and a trailing edge 134 of the respective cooling vane 114. Each cooling vane 114 has a chord line 136 which extends from its cooling vane leading edge 132 to its cooling vane trailing edge 134. The chord line 136 of each cooling vane 114 of FIG. 4 is angularly offset from the chord line 130 of each turbine vane 112, which overlaps that respective cooling vane 114, by an included offset angle 138. This offset angle 138 may be an acute angle or a right angle. The offset angle 138, for example, may be between sixty degrees and ninety degrees; e.g., between sixty degrees and seventy-five degrees, or between seventy-five degrees and ninety degrees. With this arrangement, the compressed air exiting the passage 110 into the combustion chamber 54 may make a relatively small turn when subsequently flowing into the turbine nozzle 68.

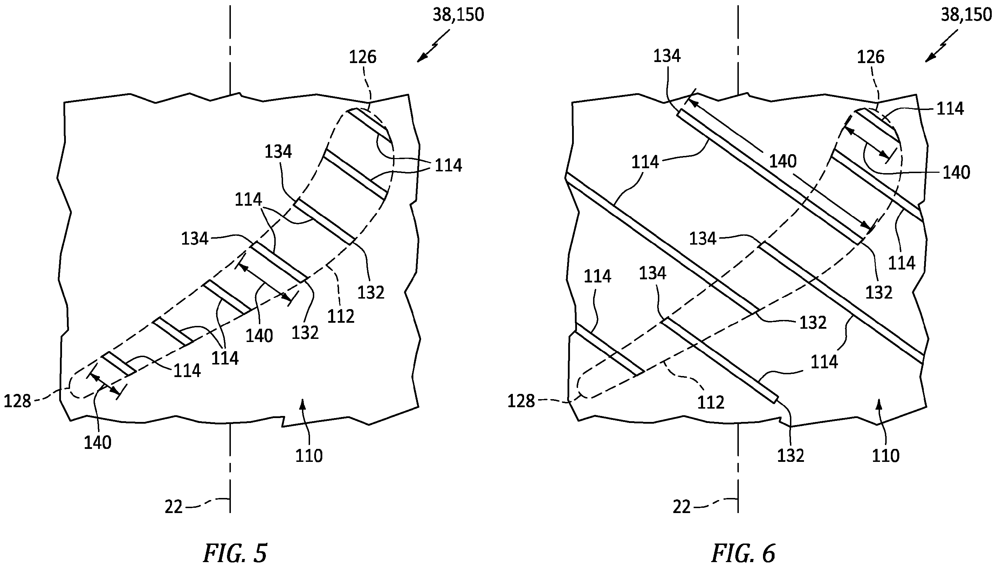

In some embodiments, referring to FIG. 4, each circumferentially neighboring (e.g., adjacent) pair of the cooling vanes 114 may be (e.g., completely) axially aligned along the axial centerline 22. For example, the cooling vane leading edges 132 and/or the cooling vane trailing edges 134 may be respectively axially aligned along the axial centerline 22. In other embodiments, referring to FIGS. 5 and 6, the cooling vanes 114 of one or more of the circumferentially neighboring pairs of the cooling vanes 114 may be axially offset along the axial centerline 22. For example, the cooling vane leading edges 132 and/or the cooling vane trailing edges 134 may be respectively axially offset along the axial centerline 22.

In some embodiments, referring to FIG. 4, each of the cooling vanes 114 may have a common (the same) longitudinal length 140. This longitudinal length 140 is measured from the leading edge 132 of a respective cooling vane 114 to the trailing edge 134 of the respective cooling vane 114; e.g., along a mean line 142 of the respective cooling vane 114. In other embodiments, referring to FIGS. 5 and 6, the longitudinal lengths 140 of the cooling vanes 114 of one or more circumferentially neighboring pairs of the cooling vanes 114 may be different.

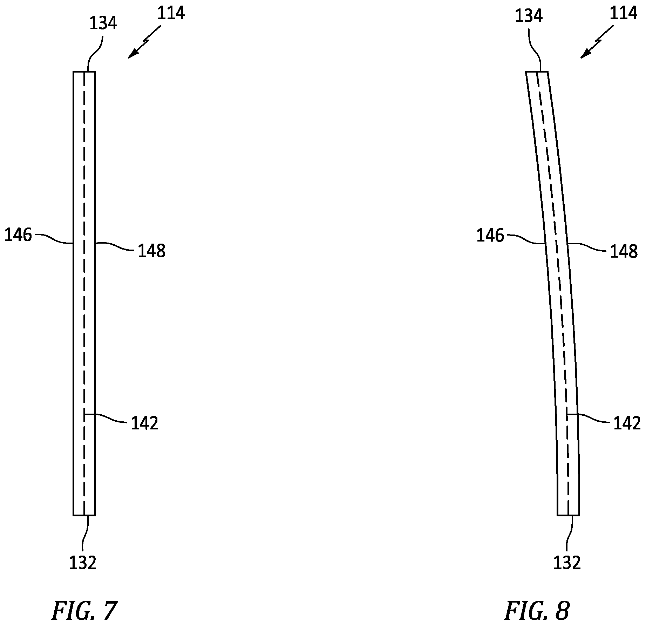

In some embodiments, referring to FIG. 7, one or more or all of the cooling vanes 114 may each be configured as a symmetrical vane; e.g., a vane without camber. The mean line 142 of the cooling vane 114 of FIG. 7, for example, is straight from the cooling vane leading edge 132 to the cooling vane trailing edge 134. In other embodiments, referring to FIG. 8, one or more or all of the cooling vanes 114 may each be configured as a cambered vane. The mean line 142 of the cooling vane 114 of FIG. 8, for example, is a camber line, where at least a portion or an entirety of the mean line 142 is curved from the cooling vane leading edge 132 to the cooling vane trailing edge 134.

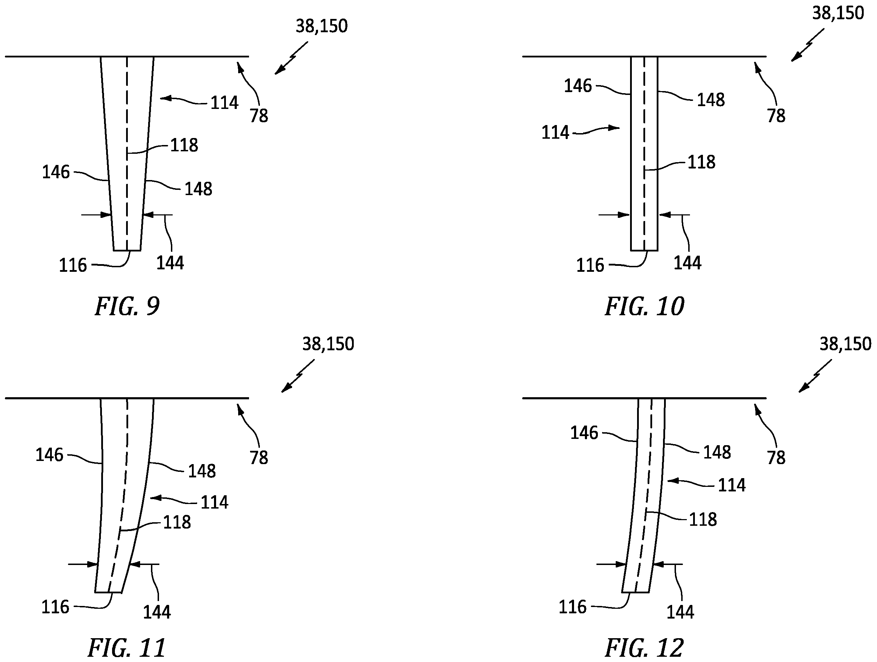

Referring to FIGS. 9 and 10, each of the cooling vanes 114 has a lateral width 144 extending between opposing lateral sides 146 and 148 of the respective cooling vane 114. Referring to FIG. 9, this cooling vane width 144 may change (e.g., decrease) as the respective cooling vane 114 projects radially out or otherwise away from the turbine nozzle inner platform 78 to or otherwise towards its distal vane end 116. The cooling vane 114 of FIG. 9, for example, laterally tapers as the cooling vane 114 extends to its distal vane end 116. Alternatively, referring to FIG. 10, the cooling vane width 144 may remain constant as the respective cooling vane 114 projects radially out or otherwise away from the turbine nozzle inner platform 78 to or otherwise towards its distal vane end 116. At least a spanwise portion or an entirety of the cooling vane 114 of FIG. 10, for example, has a uniform lateral width 144.

In some embodiments, referring to FIGS. 9 and 10, at least a portion or an entirety of the span line 118 of one or more or all of the cooling vanes 114 may be straight. In other embodiments, referring to FIGS. 11 and 12, at least a portion or an entirety of the span line 118 of one or more or all of the cooling vanes 114 may be curved or otherwise non-straight.

The cooling structure 70 is described above as including cooling vanes 114. The present invention, however, is not limited to such an exemplary arrangement. One or more or all of the cooling vanes 114, for example, may alternatively be configured as or otherwise include a straight cooling fin or another type of cooling element.

Referring to FIG. 2, at least a portion (or an entirety) of the stationary structure 38 may be formed as a monolithic body 150. At least the stationary structure members 52, 62, 64, 66, 68, 70 and 106 of FIG. 2, for example, are included in the monolithic body 150. Herein, the term "monolithic" may describe an apparatus which is formed as a single, unitary body. The stationary structure members 52, 62, 64, 66, 68, 70 and 106, for example, may be additively manufactured, cast, machined and/or otherwise formed together as an integral, unitary body. By contrast, a non-monolithic body may include multiple parts which are discretely formed from one another, where those parts are subsequently mechanically fastened and/or otherwise attached to one another.

The turbine engine 20 is described above as a single spool, radial-flow turbojet gas turbine engine for ease of description. The present invention, however, is not limited to such an exemplary turbine engine. The turbine engine 20, for example, may alternatively be configured as an axial flow gas turbine engine. The turbine engine 20 may be configured as a direct drive gas turbine engine. The turbine engine 20 may alternatively include a geartrain that connects one or more rotors together such that the rotors rotate at different speeds. The turbine engine 20 may be configured with a single spool (e.g., see FIG. 1), two spools, or with more than two spools. The turbine engine 20 may be configured as a turbofan engine, a turbojet engine, a propfan engine, a pusher fan engine or any other type of turbine engine. In addition, while the turbine engine 20 is described above with an exemplary reverse flow annular combustor, the turbine engine 20 may also or alternatively include any other type / configuration of annular, tubular (e.g., CAN), axial flow and/or reverse flow combustor. The present invention therefore is not limited to any particular types or configurations of turbine engines.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for a turbine engine (20), comprising:
a nozzle structure (68) including a first platform (78), a second platform (76) and a plurality of nozzle vanes (112) arranged circumferentially about an axis (22), the first platform (78) forming a first peripheral boundary of a flowpath (28) extending axially through the nozzle structure, the second platform (76) forming a second peripheral boundary of the flowpath (28) extending axially through the nozzle structure, and the plurality of nozzle vanes (112) extending radially across the flowpath (28) from the first platform (78) to the second platform (76); and
a plurality of cooling vanes (114) arranged circumferentially about the axis (22), each of the plurality of cooling vanes (114) projecting radially from the first platform (78), wherein the first platform (78) is radially between the plurality of cooling vanes (114) and the plurality of nozzle vanes (112).

2. The assembly of claim 1, further comprising:
a compressor section (31);
a combustor section (32) comprising a combustor (52); and
a turbine section (33) comprising a bladed turbine rotor (46), the flowpath (28) extending through the compressor section (31), the combustor section (32) and the turbine section (33) with the nozzle structure (68) arranged between the combustor (52) and the bladed turbine rotor (46) along the flowpath (28).

3. The assembly of claim 1 or 2, wherein:
the first platform (78) comprises an inner platform; and
the second platform (76) comprises an outer platform radially outboard of and circumscribing the inner platform.

4. The assembly of claim 1, 2 or 3, wherein each of the plurality of cooling vanes (114) has a common longitudinal length (140).

5. The assembly of claim 1, 2 or 3, wherein:
the plurality of cooling vanes (114) include a first cooling vane and a second cooling vane;
the first cooling vane has a first longitudinal length (140) extending longitudinally between a leading edge (132) of the first cooling vane and a trailing edge (134) of the first cooling vane; and
the second cooling vane has a second longitudinal length (140) extending longitudinally between a leading edge (132) of the second cooling vane and a trailing edge (134) of the second cooling vane, and the second longitudinal length (140) is different than the first longitudinal length (140).

6. The assembly of any preceding claim, wherein:
the plurality of cooling vanes (114) comprises a first cooling vane; and
the first cooling vane laterally tapers as it projects radially away from the first platform (78); or
at least a spanwise portion of the first cooling vane has a uniform lateral width (144).

7. The assembly of any preceding claim, wherein:
the plurality of cooling vanes (114) comprises a or the first cooling vane; and
the first cooling vane comprises a cambered vane or a symmetrical vane.

8. The assembly of any preceding claim, wherein:
the plurality of cooling vanes (114) comprises a or the first cooling vane;
the first cooling vane projects out from the first platform (78) along a span line (118) of the first cooling vane to an end (116) of the first cooling vane; and
at least a portion of the span line (118) is straight.

9. The assembly of any preceding claim, wherein:
the plurality of cooling vanes (114) comprises a or the first cooling vane;
the first cooling vane projects out from the first platform (78) along a or the span line (118) of the first cooling vane to an or the end (116) of the first cooling vane; and
at least a portion of the span line (118) is curved.

10. The assembly of any preceding claim, wherein:
the plurality of cooling (114) vanes comprises a or the first cooling vane; and
the first cooling vane projects radially out from the first platform (78) to an unsupported distal end (116) of the first cooling vane.

11. The assembly of any preceding claim, further comprising:
a or the combustor (52) comprising a combustor wall (74); and
the first platform (78) axially overlapping a downstream end portion (98) of the combustor wall, wherein the plurality of cooling vanes (114) comprises a or the first cooling vane radially spaced from the combustor wall (74) by a gap (120).

12. The assembly of any preceding claim, wherein:
the plurality of cooling vanes (114) comprises a or the first cooling vane and a or the second cooling vane; and
the plurality of nozzle vanes (112) comprises a first nozzle vane that circumferentially overlaps the first cooling vane and the second cooling vane.

13. The assembly of any preceding claim, wherein:
the plurality of cooling vanes (114) comprises a or the first cooling vane;
the plurality of nozzle vanes (112) comprises a or the first nozzle vane that circumferentially overlaps the first cooling vane; and
a chord line (136) of the first cooling vane is angularly offset from a chord line (130) of the first nozzle vane by an angle between sixty degrees and ninety degrees.

14. The assembly of any preceding claim, wherein:
a circumferentially neighboring pair of the plurality of cooling vanes (114) are axially aligned along the axis (22); or
a circumferentially neighboring pair of the plurality of cooling vanes (114) are axially offset along the axis (22).

15. The assembly of any preceding claim, comprising a monolithic body (150) including the nozzle structure and the plurality of cooling vanes (114).
